# EUROPEAN PATENT APPLICATION

(11) **EP 4 802 903 A1**
(43) Date of publication of application: **09.09.2026**
(21) Application number: 24901114.9
(22) Date of filing: 06.12.2024
(51) Int. Cl.: A23L 7/196, A23L 27/20

(54) **FROZEN PORRIDGE WITH EXCELLENT TEXTURE AND MANUFACTURING METHOD THEREOF**

(30) Priority: 07.12.2023 KR 20230176713
(71) Applicant: CJ Cheiljedang Corporation, Seoul 04560 (KR)
(72) Inventor: SHIM, Heeryung, Seoul 04560 (KR); LEE, Ki Sun, Seoul 04560 (KR); SUNG, Bang Ju, Seoul 04560 (KR); YU, Young, Seoul 04560 (KR); PARK, Hongwook, Seoul 04560 (KR)
(74) Representative: Meissner Bolte Partnerschaft mbB
(86) International application number: PCT/KR2024/019902
(87) International publication number: WO 2025/121928

(57) **Abstract**

The present disclosure relates to a method for preparing frozen porridge comprising: preparing frozen cooked rice using rice comprising medium-grain rice; preparing porridge using rice comprising short-grain rice; and filling the prepared frozen cooked rice into a container, then filling the prepared porridge into the container to package them together.

## Description

### [Technical Field]

The present disclosure relates to frozen porridge with excellent texture and a method for preparing the same.

### [Background Art]

Porridge is a dish made by boiling white rice as a main ingredient with a large amount of water for a long time. Because it is easy to digest and consume, it has been consumed for various purposes since ancient times, comprising consumption as a meal for the sick, a delicacy, and even as a substitute for staple foods. Conventionally, traditional porridge was generally viewed as a restorative, therapeutic, or famine relief food with functional properties of medicinal herbs. However, recent trends in porridge consumption have changed with the change in the image of porridge to a "health food" that offers health, relaxation, and value, and thus, porridge consumption as a meal replacement is gradually increasing. As a result, it has become easily accessible in various places, such as porridge specialty shops and convenience stores.

In line with this trend, various processed porridges have recently been developed, but most of the inventions were mainly related to retort-processed porridges. However, retort food generally refers to a processed food product where a cooked food product is sealed in a special packaging material that withstands high temperature and pressure so that it can be stored without air and light for a long period and then sterilized under pressure at a high temperature of 100°C or higher. In the case of porridges, there were disadvantages in that the texture was almost nonexistent and that the taste was degraded due to the retort process.

Accordingly, research has been conducted to improve the mouthfeel of processed porridges, but problems existed in that further cooking processes, such as adding water and heating, were required.

Furthermore, there are currently no research or patents regarding the use of a combination of rice varieties to improve the mouthfeel of processed porridges.

### [Prior Art Documents]

### [Patent Documents]

(Patent Document 1) Patent Application Publication No. 10-2018-0099971

### [Disclosure]

### [Technical Problem]

One object of the present disclosure is to provide a method for preparing frozen porridge with excellent texture and flavor even after heating and cooking, through a specific combination of porridge made from short-grain rice and frozen cooked rice made from medium-grain rice.

Another object of the present disclosure is to provide frozen porridge with excellent texture and flavor and increased convenience, prepared by the method.

### [Technical Solution]

One aspect of the present disclosure provides a method for preparing frozen porridge with excellent texture and flavor even after heating and cooking, through a specific combination of porridge made from short-grain rice and frozen cooked rice made from medium-grain rice.

Another aspect of the present disclosure provides frozen porridge with excellent texture and flavor and increased convenience, prepared by the method.

### [Advantageous Effects]

By using the method for preparing porridge provided herein, it is possible to produce frozen porridge with excellent texture and flavor that can be consumed simply after microwave cooking, without the need for further cooking processes such as water addition, and thus, it can be widely applied in the development of food products with enhanced convenience.

### [Brief Description of the Drawings]

FIG. 1 is a process diagram showing the preparation process of the frozen porridge of the present disclosure.
FIG. 2 shows a comparison of images of finished frozen porridge products and rice grains according to the combination of frozen cooked rice and porridge by rice variety.
FIG. 3 shows a comparison of images of the finished products according to the mixing ratio of frozen cooked rice and porridge.
FIG. 4 is a comparison of images of frozen porridge according to one embodiment of the present disclosure and commercially available porridges.

### [Detailed Description of Preferred Embodiments]

The present disclosure will be described in detail as follows. Meanwhile, each description and embodiment described herein may be applied to other descriptions and embodiments, respectively. That is, all combinations of various elements disclosed herein fall within the scope of the present disclosure. Further, the scope of the present disclosure is not limited by the specific description described below.

One aspect of the present disclosure provides a method for preparing frozen porridge comprising: preparing frozen cooked rice using rice comprising medium-grain rice (S100); preparing porridge using rice comprising short-grain rice (S200); and filling the prepared frozen cooked rice into a container (S300) and then filling the prepared porridge into the container to package them together (S400).

The present inventors have confirmed that, by using a combination of short-grain rice and medium-grain rice in a specific mixing ratio, frozen porridge that can be consumed by simple heating, such as microwave cooking, without the need for a separate complex post-cooking process can be prepared and that the frozen porridge possesses excellent texture and flavor even after heating, thereby completing the present disclosure.

As used herein, the term "short-grain rice" refers to rice that has a short, round shape of rice grains and contains a large amount of moisture, resulting in sticky and chewy characteristics when cooked into cooked rice. Examples of the most well-known short-grain rice comprise Japonica, Samgwang, Koshihikari, Bomba, Orginario, and Gobindo bhog.

As used herein, the term "medium-grain rice" refers to rice that is longer, plumper, less sticky, and has more starch than short-grain rice, and is mainly used for risotto, paella, and sushi. Examples of the most well-known medium-grain rice comprise Carlos, Arborio, Valencia, Carolino, and Wuchang.

Generally, rice can be classified into short-grain rice, medium-grain rice, and long-grain rice depending on the length of grain, and in terms of the grain length to grain width ratio, long-grain rice is the largest and short-grain rice is the smallest. Further, in addition to grain length, there are differences in amylose content, so there are differences in mouthfeel, elasticity, *etc.* when cooked.

Frozen porridge prepared according to one embodiment of the present disclosure is not prepared by using a single type of rice, but comprises frozen cooked rice prepared by using rice comprising medium-grain rice and porridge prepared by using rice comprising short-grain rice, thereby allowing for a variety of mouthfeel.

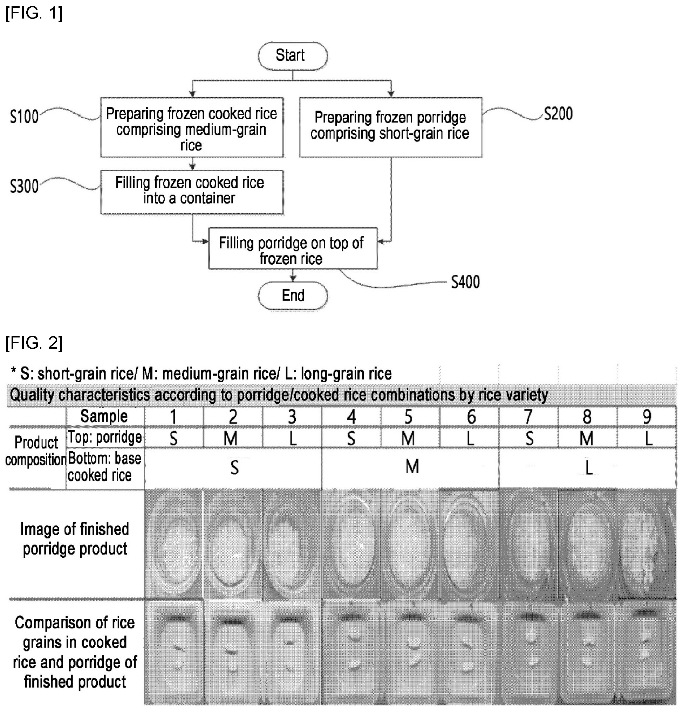

FIG. 1 is a process diagram showing the preparation process of the frozen porridge of the present disclosure. Hereinafter, the steps of the present disclosure are described in detail as follows.

The preparing frozen cooked rice using rice comprising medium-grain rice (S100) is preparing frozen cooked rice by mixing rice and water, wherein the rice may additionally undergo conventional washing and dehydration processes prior to mixing.

In the preparing frozen cooked rice (S100), rice and water may be mixed and cooked in a weight ratio of 0.8:1 to 1.2:1, specifically 0.85:1 to 1.2:1, 0.85:1 to 1.15:1, 0.85:1 to 1.1:1, 0.9:1 to 1.2:1, 0.9:1 to 1.15:1, or 0.9 to 1.1:1, more specifically 0.95:1 to 1.1:1, 0.95:1 to 1.05:1, or 0.9:1 to 1.05:1, and most specifically 1:1. When frozen cooked rice is prepared by mixing rice and water in the above range, the textures of both the porridge and cooked rice can be perceived in the final finished porridge product, and the overall texture of the porridge can be enhanced due to the mouthfeel of the cooked rice grains.

In addition, in the preparing frozen cooked rice (S100), the method may comprise soaking the rice for 60 to 90 minutes after mixing the rice and water before cooking.

In addition, in the preparing frozen cooked rice (S100), the cooking may be performed for about 15 to 30 minutes, specifically about 18 to 25 minutes, and more specifically about 20 minutes.

Specifically, the preparing frozen cooked rice (S100) may comprise freezing the cooked rice after the cooking.

In addition, specifically, the preparing frozen cooked rice (S100) may further comprise adding seasoned oil after cooking and before freezing the cooked rice. The seasoned oil can serve to separate the cooked rice grains when added to the cooked rice. As a result, it is possible to prevent the cooked rice grains from sticking to each other and clumping. In addition, the mouthfeel at the point of consumption can be improved because the cooked rice grains do not clump together when frozen.

In addition, specifically, the frozen cooked rice prepared in the preparing frozen cooked rice (S100) may comprise moisture of 40 wt% or less, specifically 35 wt% or less. If the moisture content of the frozen cooked rice is within 40 wt%, the moisture of the porridge is transferred to the frozen cooked rice during the subsequent filling of the porridge and cooked rice, allowing the mouthfeel of the porridge and cooked rice to be perceived, thereby enhancing the overall texture.

Next, preparing porridge using rice comprising short-grain rice (S200) is preparing porridge using short-grain rice with a short, round shape of rice grains. The porridge can be prepared by adding and heating rice and water in a weight ratio of 1:7 to 1:9.5 or 1:7.5 to 1:9.5, specifically 1:8 to 1:9.5 or 1:8.5 to 1:9.5, more specifically 1:8.5 to 1:9, and most specifically 1:9. The heating can utilize any conventional thermal treatment methods used in the art to prepare porridge. In addition, the rice may additionally undergo washing and dehydration processes prior to heating.

Specifically, in the preparing porridge using rice comprising short-grain rice (S200), the heating may be performed at 80°C to 100°C or 85°C to 98°C, more specifically at 90°C to 98°C.

In addition, in the preparing porridge using rice comprising short-grain rice (S200), the heating may be performed for 15 to 25 minutes, more specifically for 18 to 22 minutes.

In addition, vegetable oil or seasoning may be additionally comprised in the preparing porridge using rice comprising short-grain rice (S200).

The preparing frozen cooked rice (S100) and the preparing porridge (S200) can be performed sequentially, in reverse order, or simultaneously.

Next, filling the prepared frozen cooked rice into a container (S300) and then filling the prepared porridge into the container to package them together (S400) is filling a container with the frozen cooked rice prepared in the preparing frozen cooked rice (S100) and then filling the porridge prepared in the preparing porridge (S200) on top of the frozen cooked rice. When frozen cooked rice is filled first, the moisture of the subsequently filled porridge is smoothly transferred to the frozen cooked rice. Thus, the final finished frozen porridge product has evenly distributed moisture, and provides the mouthfeel of porridge while still allowing the perception of the textured mouthfeel of rice grains.

Specifically, the frozen cooked rice may be filled at less than 40 vol%, more specifically, at 39 vol%, 37 vol%, 35 vol%, 33 vol%, 31 vol%, 29 vol%, 27 vol%, 25 vol%, 23 vol%, or 21 vol%, and preferably less than 20 vol%, relative to the total 100 vol% of the frozen porridge. When frozen cooked rice is filled within the above range, the finished frozen porridge product comprises an appropriate amount of moisture, resulting in excellent mouthfeel and allowing the perception of the textures of both the porridge and cooked rice.

In addition, the method for preparing frozen porridge may additionally comprise adding various ingredients to enhance nutritional, functional, and organoleptic aspects. Specifically, adding seasonings, vegetables, rice flour, starch, *etc.,* may be additionally comprised before or after each step of the method for preparing frozen porridge, and specifically, the seasonings may comprise salt or sesame oil.

Another aspect of the present disclosure provides frozen porridge with enhanced texture and flavor, prepared by the method for preparing frozen porridge. In particular, the method for preparing frozen porridge is as described above.

The frozen porridge may have a compressive strength of 30 g to 50 g, specifically 32 g to 49 g, 34 g to 48 g, or 36 g to 47 g, and more specifically 40 g to 46 g, but is not limited thereto. When the compressive strength is 30 g or more and 50 g or less, chewiness may be perceived while still allowing perception of the mouthfeel of porridge. The compressive strength is measured using a texture analyzer according to the conditions shown in Table 2 below, and then expressed in g-force units based on the value of the first peak, and the above range may be appropriately modified depending on the measurement method.

In one embodiment of the present disclosure, it was confirmed that the mouthfeel and texture of the frozen porridge prepared by the method of the present disclosure were enhanced. In addition, it was confirmed that a variety of mouthfeel can be perceived by not using a single type of rice but by comprising frozen cooked rice prepared by using rice comprising medium-grain rice and porridge prepared by using rice comprising short-grain rice.

### [Modes for Carrying Out the Invention]

Hereinafter, the present disclosure will be described in detail by way of Examples. The Examples are provided to specifically explain the present disclosure, and the scope of the present disclosure is not limited by the Examples.

### Experimental Example 1: Preparation of frozen porridge

For use in the experiments of the present disclosure, frozen porridge was prepared using short-grain rice (Nonghyup, South Korea), medium-grain rice (Korea Agro-Fisheries & Food Trade Corporation, Australia), long-grain rice (Korea Agro-Fisheries & Food Trade Corporation, Vietnam), soybean oil (CJ CheilJedang, South Korea), and refined salt (Hanju, South Korea) as raw materials.

Specifically, frozen cooked rice was prepared by adding rice and water in a 1:1 ratio, and by following the order of ① washing, ② dehydrating, ③ soaking for 60 to 90 minutes, ④ cooking for about 20 minutes, ⑤ adding seasoned oil, and ⑥ freezing.

In addition, specifically, porridge was prepared by adding rice and water in a ratio of 1:9, and by ① washing, ② dehydration, ③ heating at 95°C for about 20 minutes, and ④ correction.

The correction refers to matching the conditions of the experimental groups by making the moisture content of the porridge the same for each experimental group through water addition, taking into account the difference in the degree of moisture vaporization during the heating.

Subsequently, the frozen cooked rice prepared above was filled into a container, the porridge prepared above was filled on top of the frozen cooked rice, and the container was packaged to prepare the final frozen porridge.

### Experimental Example 2: Analysis of the moisture content of frozen cooked rice by rice variety

The moisture content of frozen cooked rice prepared according to the method for preparing frozen cooked rice for each variety and the moisture content of regular rice were measured and are shown in Table 1 below. Moisture content was measured using the atmospheric pressure oven drying method specified in the Food Code.

**[Table 1]**

| | Moisture content (wt%) |
|---|---|
| Long-grain cooked rice | 31.09 |
| Medium-grain cooked rice | 31.41 |
| Short-grain cooked rice | 31.49 |
| Regular cooked rice | 41.15 |

Referring to Table 1, it can be confirmed that frozen cooked rice prepared according to the preparing method of the present disclosure has a lower moisture content compared to the regular cooked rice.

### Experimental Example 3: Comparison of quality characteristics according to combinations of rice varieties

To compare the texture and sensory appeal of the final finished frozen porridge products according to the rice variety, frozen cooked rice and porridge were prepared for each variety, and texture preference, compressive strength, moisture content, sensory evaluation, and the like were confirmed.

Texture preference was evaluated by relatively assessing the texture perceived in the mouth when consuming frozen porridge cooked in a microwave.

Flowability was evaluated relatively by visually observing the state of the frozen porridge cooked in a microwave.

Physical properties were measured by cooking the porridge in a microwave oven so that the temperature of the porridge was between 60 and 70°C to check the texture of the porridge in the ingested state, and then using a texture analyzer according to the conditions indicated in Table 2 below. The height of the first peak was determined as the compressive strength.

**[Table 2]**

| Sample | Conditions |
|---|---|
| Sample capacity | 20 g |
| Probe | Circular, 20 mm in diameter |
| Pre-test speed | 1 mm / sec |
| Test speed | 2 mm/ sec |
| Post-test speed | 10 mm / sec |
| Pressure | 98% compression |
| Distance | 5 mm |

Moisture content was measured using the atmospheric pressure oven drying method specified in the Food Code. Sensory evaluation was conducted by 9 panelists tasting, and the table of evaluations for each item is shown in Table 3 below.

**[Table 3]**

| Quality characteristics according to porridge/cooked rice combinations by rice variety | | | | | | | | | | |
|---|---|---|---|---|---|---|---|---|---|---|
| | | Compara tive Example 1 | Compara tive Example 2 | Compara tive Example 3 | Example 1 | Compara tive Example 4 | Compara tive Example 5 | Compara tive Example 6 | Compara tive Example 7 | Compara tive Example 8 |
| Compo sition | Frozen cooked rice | Short-grain | | | Medium-grain | | | Long-grain | | |
| | Porridg e | Short-grain | Medium-grain | Long-grain | Short-grain | Medium-grain | Long-grain | Short-grain | Medium-grain | Long-grain |
| Texture preference | | 4 | 3 | 1 | 5 | 2 | 1 | 3 | 2 | 1 |
| Flowability | | 4 | 5 | 2 | 3 | 4 | 2 | 5 | 5 | 2 |
| Compressive strength (g) | | 35.27 | 32.78 | 50.03 | 45.46 | 33.57 | 57.3 | 31.57 | 31.63 | 62.23 |
| Moisture content (wt%) | | 55.19 | 54.01 | 53.62 | 52.8 | 52.9 | 53.45 | 54.68 | 54.96 | 54.56 |
| Sensory evaluation | | No crumblin g of cooked rice grains and high moisture content, but absence of texture. | Strong feel of crumblin g and a significa nt residual sensatio n in the mouth. | Lack of moisture and high chewine ss, resulting in a weak porridge-like feel; difficult to visually recogniz e as porridge. | Texture perceptio n of both the porridge and cooked rice and enhance d overall texture of the porridge due to the texture of the cooked rice grains. | Strong mouthfe el of grains crumblin g, with a significant residual sensatio n remainin g in the mouth. | Lack of moisture and high chewine ss, resulting in a weak porridge-like feel; difficult to visually recogniz e as porridge. | Strong tendency of crumblin g, with a significa nt residual sensatio n in the mouth. | Strong mouthfe el of grains crumblin g, with a significant residual sensatio n remainin g in the mouth. | Lack of moisture and high chewine ss, resulting in a weak porridge-like feel; difficult to visually recogniz e as porridge. |

FIG. 2 shows a comparison of images of finished frozen porridge products and rice grains according to the combination of frozen cooked rice and porridge by rice variety. Referring to Table 3 and FIG. 2, when comparing the rice grains of the finished frozen porridge product, it can be confirmed that there are differences in texture among the experimental groups due to the difference in the degree of expansion of rice grains between frozen cooked rice and porridge. Through the results of Comparative Examples 3, 5, and 8, it was confirmed that when porridge is prepared using long-grain rice, it has an appearance and mouthfeel unsuitable for porridge due to the moisture-absorbing properties unique to long-grain rice.

In addition, it can be confirmed that compressive strength and flowability are inversely proportional. In addition, when the compressive strength is in the 30 g range, the physical properties are too soft and lack chewiness. When it is 50 g or more, the chewiness is too strong, and the porridge-like feel is weak. Regarding the texture preference, it can be confirmed that a state with moderate texture was preferred, while cases that were too soft or too firm tended to be unpreferred. Accordingly, it was confirmed that the texture of the frozen porridge of Example 1, which has a compressive strength in the 40 g range, is suitable.

### Experimental Example 4: Comparison of quality characteristics of frozen porridge according to the mixing ratio of frozen cooked rice/porridge

To compare the texture and sensory appeal of the finished frozen porridge products according to the mixing ratio of frozen cooked rice and porridge, frozen cooked rice and porridge were prepared for each variety, and texture preference, compressive strength, moisture content, sensory evaluation, and the like were confirmed.

The evaluation of each item was conducted in the same manner as in Experimental Example 3 above, and the results are shown in Table 4 below.

**[Table 4]**

| Quality characteristics of frozen porridge according to the mixing ratio of frozen cooked rice/porridge | | | | | | | |
|---|---|---|---|---|---|---|---|
| | | Example 2 | Comparative Example 9 | Comparative Example 10 | Comparative Example 11 | Comparative Example 12 | Comparative Example 13 |
| Mixing ratio (wt%) | Short-grain porridge | 90 | 80 | 70 | 50 | 30 | 10 |
| | Medium-grain frozen cooked rice | 10 | 20 | 30 | 50 | 70 | 90 |
| Texture preference | | 5 | 3 | 3 | 1 | 1 | 0 |
| Flowability | | 3 | 2 | 1 | - | - | - |
| Compressive strength (g) | | 45.60 | 74.79 | 99.67 | 185.03 | 217.37 | 275.50 |
| Moisture content (wt%) | | 55.05 | 52.61 | 48.92 | 46.41 | 43.15 | 34.84 |
| Sensory evaluation | | A porridge-like mouthfeel while allowing the perception of rice grains with distinct texture. | A strong texture of cooked rice, making it difficult to view as porridge. | Very soft cooked rice and considered smooth. | Texture of soft cooked rice | Texture of regular cooked rice | Texture of firm cooked rice |

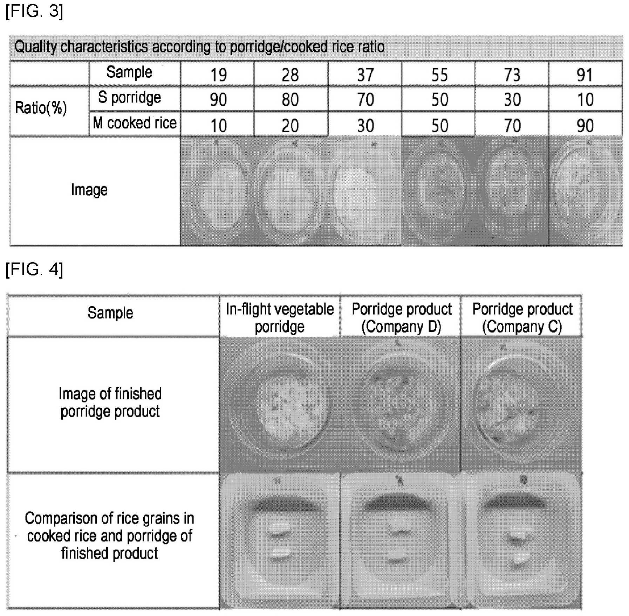

FIG. 3 shows a comparison of images of the finished products according to the mixing ratio of frozen cooked rice and porridge. Referring to Table 4 and FIG. 3, it can be confirmed that when frozen cooked rice is filled at 20 wt% or more, the texture of the cooked rice is strongly perceived, making it difficult to view it as porridge. In addition, it was confirmed that as the proportion of frozen cooked rice increased, the compressive strength increased and the texture improved in the sensory evaluation.

### Experimental Example 5: Analysis of quality characteristics according to the filling order of frozen cooked rice and porridge

To compare the texture and sensory appeal of frozen porridge according to the filling order of frozen cooked rice and porridge, final finished frozen porridge products were prepared by varying the filling order of the frozen cooked rice and porridge prepared by the method, and each was evaluated for texture preference, flowability, compressive strength, sensory evaluation, and the like. The evaluation of each item was conducted in the same manner as in Experimental Example 3 above, and the results are shown in Table 5 below.

**[Table 5]**

| Quality characteristics of porridge by filling order | | |
|---|---|---|
| | Example 3 | Comparative Example 14 |
| Filling order | Frozen cooked rice → Porridge | Porridge → Frozen cooked rice |
| Texture preference | 5 | 3 |
| Flowability | 3 | 4 |
| Compressive strength (g) | 45.60 | 56.45 |
| Sensory evaluation | A porridge-like mouthfeel while allowing the perception of rice grains with distinct texture. | Incomplete moisture transfer to the cooked rice grains, resulting in porridge with a strong texture. |

Referring to Table 5, it can be recognized that the texture and mouthfeel vary depending on the filling order of frozen cooked rice and porridge, and the same trend is also observed with compressive strength. In addition, it was confirmed that the texture of Example 3, in which frozen cooked rice was filled first and then porridge was filled on top of the cooked rice, was excellent, and that when porridge was filled first, moisture transfer was not smooth, so the texture was not suitable for porridge.

### Experimental Example 6: Comparative analysis with commercially available processed porridge products

To compare the final quality characteristics of the finished in-flight vegetable porridge (frozen porridge) prepared according to one embodiment of the present disclosure with commercially available porridge, texture preference, compressive strength, and sensory evaluation were conducted for each sample. The evaluation of each item was conducted in the same manner as in Experimental Example 3 above, and the results are shown in Table 6 below.

**[Table 6]**

| Product comparison with commercially available porridges | | | |
|---|---|---|---|
| | Example 4 (In-flight vegetable porridge) | Porridge product (Company D) | Porridge product (Company C) |
| Texture preference | 5 | 2 | 2 |
| Compressive strength (g) | 43.83 | 19.83 | 27.38 |
| Sensory evaluation | Porridge-like mouthfeel, and the texture of the rice grains can be perceived. | Barely any texture of rice grains. | Barely any texture of rice grains. |
| | | Degraded taste due to retort sterilization. | Degraded taste due to retort sterilization. |
| | Excellent flavor with the taste of freshly made porridge. | | |

FIG. 4 is a comparison of images of frozen porridge and commercially available porridge according to one embodiment of the present disclosure. Referring to Table 6 and FIG. 4, it can be confirmed that the lower the compressive strength, the lower the texture preference. In addition, it was confirmed that commercially available porridge consists of only a single type of grain, making it impossible to experience a variety of textures, and that retort sterilization makes it difficult to perceive the texture. In addition, unlike frozen porridge, retort porridge has a dark color, and in sensory evaluation, it was confirmed that preference was lower because the taste was degraded due to the sterilization process during preparation.

As set forth above, those skilled in the art will be able to understand that the present disclosure may be embodied in other specific forms without departing from the technical spirit or essential characteristics thereof. In this regard, the embodiments disclosed herein are only for illustrative purposes and should not be construed as limiting the scope of the present disclosure. The scope of the present disclosure should be construed as comprising the meaning and scope of the appended claims rather than the detailed description, and all changes or variations derived from the equivalent concepts fall within the scope of the present disclosure.

## Claims

1. A method for preparing frozen porridge comprising:
preparing frozen cooked rice using rice comprising medium-grain rice;
preparing porridge using rice comprising short-grain rice; and
filling the prepared frozen cooked rice into a container and then filling the prepared porridge into the container to package them together.

2. The method of claim 1,
wherein the preparing frozen cooked rice is mixing and cooking rice and water in a weight ratio of 0.8:1 to 1.2:1.

3. The method of claim 2,
wherein the preparing frozen cooked rice comprises freezing after the cooking.

4. The method of claim 3,
wherein the preparing frozen cooked rice further comprises adding seasoned oil after cooking and before the freezing.

5. The method of claim 1,
wherein the frozen cooked rice prepared in the preparing frozen cooked rice comprises moisture of 40 wt% or less.

6. The method of claim 1,
wherein the preparing porridge is adding and heating rice and water in a weight ratio of 1:7 to 1:9.5.

7. The method of claim 1,
wherein the frozen cooked rice is filled in an amount of less than 20 vol% based on 100 vol% of the total frozen porridge.

8. Frozen porridge prepared by the method according to any one of claims 1 to 7.

9. Frozen porridge of claim 8,
wherein the frozen porridge has a compressive strength of 30 g to 50 g.
